# EUROPÄISCHE PATENTSCHRIFT

(11) **EP 1 354 157 B1**
(45) Veröffentlichungstag und Bekanntmachung des Hinweises auf die Patenterteilung: **13.12.2006**
(21) Anmeldenummer: 02701192.3
(22) Anmeldetag: 15.01.2002
(51) Int. Cl.: F16K 1/22

(54) **KLAPPENVENTIL**
FLAP VALVE
SOUPAPE A CLAPET

(30) Priorität: 16.01.2001 DE 10101657; 25.04.2001 DE 10120120
(43) Veröffentlichungstag der Anmeldung: 22.10.2003
(73) Patentinhaber: ROBERT BOSCH GMBH, 70442 Stuttgart (DE)
(72) Erfinder: KNAUSS, Uwe, 73527 Schwaebisch Gmuend (DE)
(86) Internationale Anmeldenummer: PCT/DE2002/000096
(87) Internationale Veröffentlichungsnummer: WO 2002/055914

(56) Entgegenhaltungen:
- EP-A- 0 791 734
- EP-A- 1 115 991
- WO-A-99/67520
- GB-A- 759 111
- US-A- 4 241 704
- US-A- 5 531 205
- US-A- 6 135 415

## Beschreibung

### Stand der Technik

Die Erfindung geht aus von einem Klappenventil zum Steuern eines Gasstroms nach dem Oberbegriff des Anspruchs 1, 2, 3 oder 4.

Bei einer bekannten Anordnung einer Drosselklappe zum Steuern eines Abgasstroms in einem Abgaskanal einer Brennkraftmaschine (DE 43 05 123 A1) ist die die Drosselklappe tragende Klappenwelle, die sich parallel zur Klappenfläche der Drosselklappe erstreckt, beiderseits durch eine Lagerbohrung in der Kanalwand des Abgaskanals geführt und ragt dort jeweils durch eine Lagerhülse hindurch. Zur Erzielung einer größeren Dichtigkeit bei Vermeidung einer Schwergängigkeit der Klappenbetätigung sind die durch Federkraft in jeweils einem Lagergehäuse axial vorgespannten Lagerhülsen innerhalb der Lagergehäuse radial verschieblich, wodurch Maßabweichungen zwischen an der Kanalwand ausgebildeten Anschlagflächen für die Drosselklappe und der Klappenwellenlagerung beim ersten Schließen der Drosselklappe selbsttätig kompensiert werden.

In der nicht vorveröffentlichten DE 199 34 113.3 ist es bereits vorgeschlagen worden, ein Klappenventil der eingangs genannten Art als Abgasrückführventil zur dosierten Zumischung von Abgas zu der angesaugten Frischluft im Ansaugtrakt einer Brennkraftmaschine zu verwenden. Hierzu ist im Mantel eines Ansaugrohrs des Ansaugtrakts eine Öffnung vorgesehen, in die das Klappenventil mit seinem Ventilauslaß gasdicht eingesetzt ist. Die Ventilklappe ist mit zur Klappenebene schräg angestellter Klappenwelle zur Klappenverstellung in einem Dünnwandrohr angeordnet, das mit radialem Spiel in dem steifen Ventilrohr einliegt und mit einem Rohrabschnitt an dem Ventilrohr befestigt ist. Durch entsprechende Formgestaltung der Ventilklappe schmiegt sich die Ventilklappe in ihrer Schließstellung an die Innenwand des elastischen Dünnwandrohrs an und schließt den Rohrquerschnitt gasdicht ab, so daß auf eine separate Dichtung zwischen Ventilrohr und Ventilklappe verzichtet werden kann. In der US 5,531,205 wird ein weiteres Beispiel gezeigt.

### Vorteile der Erfindung

Das erfindungsgemäße Klappenventil mit den Merkmalen jeweils eines der Ansprüche 1 - 4 hat den Vorteil, beim Schließen eine hohe Dichtigkeit mit geringstmöglichem Drehmoment zu erreichen. Sowohl durch die Flexibilität des Ventilrohrs und/oder der Ventilklappe als auch durch Verkippen des Ventilrohrs und/oder der Ventilklappe ergibt sich am Klappenventil beim Schließen ein relativ ausgeglichenes Spannungsniveau, das zur Folge hat, daß das Klappenventil trotz hoher Dichtheit in gewissen symmetrischen Grenzen keinen mechanischen Anschlag aufweist. Durch die Abschrägung des Rohrendes befindet sich ein Teil der Klappenkontur während der Bewegung der Ventilklappe außerhalb des Ventilrohrs, wodurch nur eine partielle Berührung zustande kommt, so daß ein sehr kleines Drehmoment zur Verstellung der Ventilklappe ausreicht. Erst wenn beim Schließen die Klappengeometrie annähernd von der Geometrie des Ventilrohrs umschlossen wird, ergibt sich durch die Deformation sowie das Verkippen des Ventilrohrs und/oder der Ventilklappe ein etwas höheres Betätigungsmoment. Darüber hinaus läßt sich durch die Wahl des von der Flächennormalen der Ventilklappe und der Rohrachse des Ventilrohrs eingeschlossenen Klappenschrägungswinkels eine frei variable Kennlinie des Klappenventils bezüglich maximalem Durchfluß und Kleinmengendosierung erreichen. Je kleiner der Klappenschrägungswinkel wird, desto weniger offenen Querschnitt gibt das Klappenventil aufgrund der Rohrabschrägung frei. Außerdem vergrößert sich durch die Schrägstellung der Ventilklappe deren Schwenkwinkel zwischen ihrer Schließstellung und ihrer maximalen Öffnungsstellung auf 180°, so daß durch den größeren Schwenkweg zu Beginn der Öffnungsbewegung und gegen Ende der Schließbewegung der Ventilklappe eine sehr feinfühlige Kleinmengendosierung erreicht wird.

Durch die in den weiteren Ansprüchen aufgeführten Maßnahmen sind vorteilhafte Weiterbildungen und Verbesserungen des im Anspruch 1, 2, 3 oder 4 angegebenen Klappenventils möglich.

Gemäß einer vorteilhaften Ausführungsform der Erfindung ist die Klappenwelle unter einem spitzen Winkel zur Flächennormalen der Ventilklappe geneigt. Ein Zusammenfallen der Flächennormalen und der Achse der Klappenwelle ist ebenso auszuschließen, wie die rechtwinklige Ausrichtung beider zueinander. Bevorzugt wird eine Anordnung der Klappenwelle so vorgenommen, daß die Wellenachse der Klappenwelle mit der Rohrachse fluchtet.

Gemäß einer vorteilhaften Ausführungsform der Erfindung weist die Ventilklappe eine ihre Außenkontur festlegende Randfläche auf, die konvex gewölbt ist, also in Richtung der Flächennormalen der Ventilklappe gerundet ist. Dies hat den Vorteil, daß das Ventilrohr durch Verformung und/oder Verkippung in der Schließstellung die Ventilklappe formschlüssig umschmiegen und dadurch eine hohe Dichtigkeit herstellen kann, ohne daß es sich bleibend deformiert, wie dies bei einer scharfkantigen Außenkontur der Ventilklappe der Fall wäre.

Gemäß einer vorteilhaften Ausführungsform der Erfindung ist das Ventilrohr zumindest im Schließbereich der Ventilklappe elastisch verformbar und dünnwandig ausgebildet. Die Abmessungen der Außenkontur der Ventilklappe sind dabei etwas größer bemessen, als die Abmessungen der Innenkontur des Ventilrohrs im Schließbereich der Ventilklappe. Dadurch kann sich das Ventilrohr an die Ventilklappe gut anschmiegen und gleichzeitig durch die unterschiedlichen Angriffspunkte der Ventilklappe auch zur Seite kippen, was eine sehr hohe Dichtigkeit bewirkt. Durch Variation der Rohrbefestigung in dem vom abgeschrägten Rohrende abgekehrten Rohrendbereich kann weiterhin auch eine Veränderung des maximalen Schließmoments sowie eine Veränderung des Anstiegsverhaltens des Schließmoments bewirkt werden.

Wichtig für das Anschmiegen des Ventilrohrs an die Ventilklappe ist es, daß die Wandstärke des Ventilrohrs nicht zu groß und der Innendurchmesser des Ventilrohrs nicht zu klein ist. Im Gegensatz dazu darf aus Festigkeits- und Schwingungsgründen die Wandstärke des Ventilrohrs nicht zu klein und der Innendurchmesser des Ventilrohrs nicht zu groß gewählt werden. Gemäß einer vorteilhaften Ausführungsform der Erfindung ist daher das Dünnwandrohr mit einer Wandstärke zwischen 0,05 mm und 2 mm ausgeführt und der Innendurchmesser des Ventilrohrs zwischen 5 mm und 200 mm gewählt.

Gemäß einer vorteilhaften Ausführungsform der Erfindung ist das Ventilrohr in einem vom abgeschrägten Rohrende beabstandeten Rohrabschnitt faltenbalgartig gewellt. Dieser Rohrabschnitt unterstützt ein Schrägstellen sowie Verkippen des Ventilrohrs und verhindert somit sehr zuverlässig einen mechanischen Anschlag im Klappenventil, was zu einer besseren Umschließung der Ventilklappe durch das Ventilrohr führt. Durch die Verkippung des Ventilrohrs läßt sich die Ventilklappe trotz größerer Außenkontur im Vergleich zur Innenkontur des abgeschrägten Rohrendes ohne Anschlag durchdrehen. Dies vereinfacht die Regelbarkeit des Klappenventils und minimiert gleichzeitig die Gefahr von mechanischen Klemmern bei evtl. Maßschwankungen der Ventilklappe, die sich ohnehin durch die Schrägstellung der Ventilklappe gegenüber dem Ventilrohr weniger stark auswirken.

Das erfindungsgemäße Klappenventil findet vorzugsweise Verwendung als Abgasrückführventil in der Abgasrückführleitung einer Brennkraftmaschine oder als Drosselhlappeneinheit in der Zuluftleitung eines Ansaugtrakts einer Brennkraftmaschine.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines Klappenventils in Anwendung als Abgasrückführventil,
- Fig. 2: eine Schnitt gemäß Linie II - II einer Ventilklappe im Klappenventil gemäß Fig. 1,
- Fig. 3 und 4: jeweils eine perspektivische Darstellung des Klappenventils in zwei verschiedenen Schwenkstellungen der Ventilklappe,
- Fig. 5: eine Draufsicht des Klappenventils in Richtung Pfeil V in Fig. 4,
- Fig. 6 und 7: eine perspektivische Darstellung eines modifizierten Klappenventils in zwei verschiedenen Schwenkstellungen der Ventilklappe,
- Fig. 8: eine perspektivische Darstellung eines weiteren Ausführungsbeispiels des Klappenventils,
- Fig. 9 und 10: jeweils eine Skizze des Klappenventils gemäß Fig. 1 - 4 zur Illustrierung der Kippbarkeit von Ventilrohr (Fig. 9) und Ventilklappe (Fig. 10).

### Beschreibung der Ausführungsbeispiele

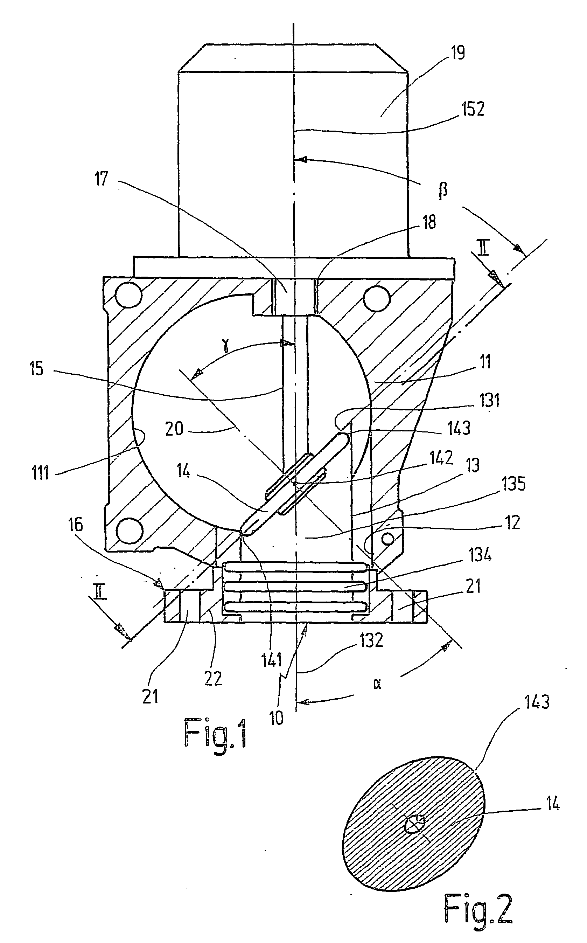

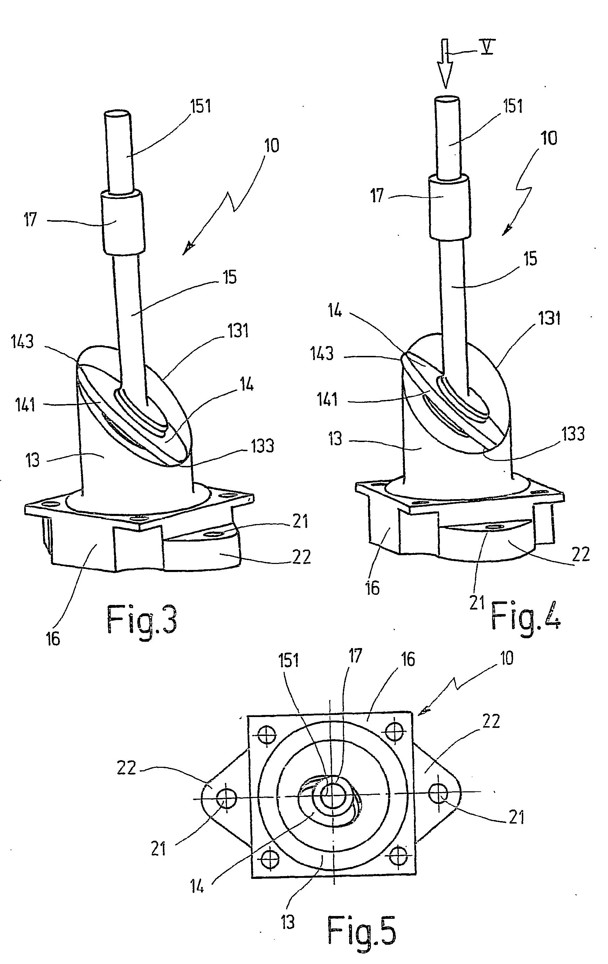

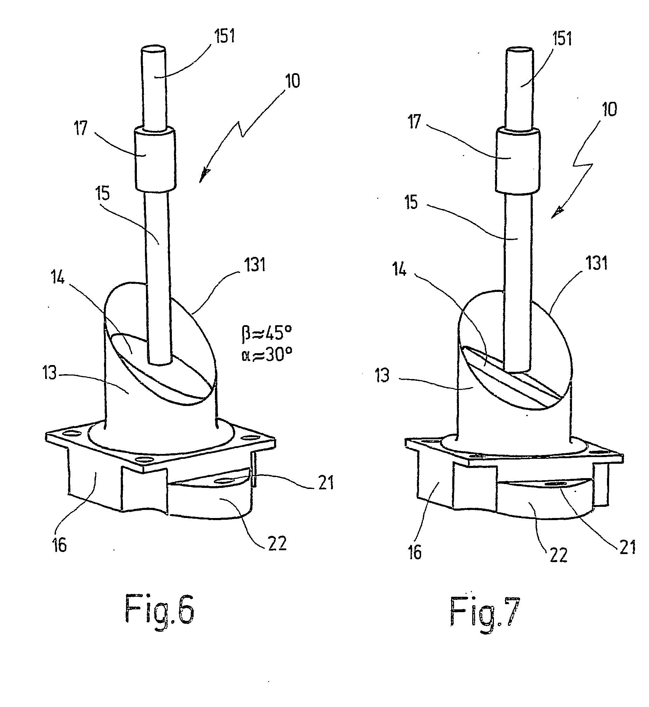

Das in Fig. 3 und 4 bzw. in Fig. 6 und 7 perspektivisch dargestellte Klappenventil 10 dient im Ausführungsbeispiel der Fig. 1 als Abgasrückführventil im Ansaugtrakt einer Brennkraftmaschine. Dieser weist ein zu der Brennkraftmaschine führendes Ansaugrohr 11 für Luft auf, in dem üblicherweise eine hier nicht dargestellte Drosselklappe zur Steuerung des Luftstroms angeordnet ist. Im Mantel des Ansaugrohrs 11 ist eine Öffnung 12 eingebracht, deren Achse rechtwinklig zur Achse des Ansaugrohrs 11 ausgerichtet ist.

Das in Fig. 3 und 4 perspektivisch und in Fig. 1 im Längsschnitt dargestellte Klappenventil 10 weist ein dünnwandiges, flexibles, ggf. elastisch verformbares Ventilrohr 13 mit steuerbarem Rohrquerschnitt 135 und eine im Ventilrohr 13 angeordnete Ventilklappe 14 auf, die am Stirnende einer Klappenwelle 15 befestigt ist und durch Drehen der Klappenwelle 15 zwischen einer den Rohrquerschnitt 135 des Ventilrohrs 13 maximal freigebenden Offenstellung und einer den Rohrquerschnitt 135 des Ventilrohrs 13 abdeckenden Schließstellung (Fig. 1) schwenkbar ist. Das Ventilrohr 13 ist mit seinem einen Rohrende in einem Ventilsockel 16 festgelegt, der mit dem Ansaugrohr 11 fest verbindbar ist. An dem Ventilsockel 16 ist ein Flansch 22 mit Befestigungslöchern 21 zum Ansetzen einer Abgasrückführleitung ausgebildet. Der in den Ventilsockel 16 eingesetzte Rohrabschnitt 134 des Ventilrohrs 13 ist faltenbalgartig ausgebildet, so daß eine gewisse Flexibilität im Befestigungsbereich mit der Möglichkeit des Kippens des Ventilrohrs 13 gegenüber der Klappenwelle 15 besteht. Das von diesem Rohrende abgekehrte freie Rohrende des Ventilrohrs 13 ist abgeschrägt, und zwar so, daß der umlaufende Rohrrand 131 in einer unter einem spitzen Winkel β zur Rohrachse 132 des Ventilrohrs 13 verlaufenden Ebene liegt. Dieser Winkel β wird im folgenden Rohrschrägungswinkel β genannt. Nach Einsetzen des Klappenventils 10 in die Öffnung 12 des Ansaugrohrs 11 und Befestigen des Ventilsockels 16 steht das Ventilrohr 13 über die Innenwand 111 des Ansaugrohrs 11 vor. Vorzugsweise liegt der vom Rohrende am weitesten axial zurückgesetzte Randpunkt 133 des Rohrrands 131 unmittelbar an der Innenwand 111 des Ansaugrohrs 11.

Die an ihrem einen Ende die Ventilklappe 14 tragende Klappenwelle 15 ist mit einem Lagerteil 17 in einer den Mantel des Ansaugrohrs 11 durchstoßenden Lagerbohrung 18 drehbar aufgenommen und ragt mit ihrem Wellenende 151 aus dem Ansaugrohr 11 heraus. An dem Wellenende 151 greift ein am Ansaugrohr 11 befestigter Stellmotor 19 zum Betätigen des Klappenventils 10 an. Im Ausführungsbeispiel der Fig. 1 - 4 ist die Klappenwelle 15 koaxial zur Rohrachse 132 des Ventilrohrs 13 ausgerichtet. Sie kann jedoch auch gegenüber der Rohrachse 132 bis zu 5° geneigt sein, wobei grundsätzlich zwischen der Achse 152 der Klappenwelle 15 und der Flächennormalen 20 der Ventilklappe 14 ein spitzer Winkel γ (Fig. 1), im folgenden Wellenneigungswinkel γ genannt, eingehalten werden muß.

Die Ventilklappe 14 weist - wie dies aus der Schnittdarstellung in Fig. 2 ersichtlich ist - eine elliptische oder annähernd elliptische Außenkontur auf und ist im Ventilrohr 13 an oder nahe dem geschrägten Rohrende so angeordnet, daß ihre Flächennormale 20 mit der Rohrachse 132 einen spitzen Winkel α (Fig. 1), im folgenden Klappenschrägungswinkel α genannt, einschließt. Dabei ist - wie aus Fig. 1 ersichtlich ist - die Außenkontur der Ventilklappe 14 in Richtung der Flächennormalen 20 dadurch gerundet, daß die die Außenkontur festlegende Randfläche 141 der Ventilklappe 14 konvex gewölbt ist (Fig. 1). Diese Rundung der Randfläche 141 ermöglicht in der Schließstellung der Ventilklappe 14 ein Umschlingen der Ventilklappe 14 durch das flexible, dünnwandige Ventilrohr 13 ohne bleibende Deformation des Ventilrohrs 13. Der von der Flächennormalen 20 der Ventilklappe 14 und der Rohrachse 132 eingeschlossene Klappenschrägungswinkel α und der zwischen der Ebene des schrägen Rohrendes und der Rohrachse 132 eingeschlossene Rohrschrägungswinkel β (Fig. 1) sind unabhängig voneinander frei wählbar, wobei der Wählbereich für den Klappenschrägungswinkel α zwischen 1° und 89° und für den Rohrschrägungswinkel β zwischen 3° und 85° festgelegt ist. Entsprechend den gewählten Winkeln α und β muß die Eintauchtiefe der Ventilklappe 14 in das Ventilrohr 13 eingestellt werden. Ist der Klappenschrägungswinkel α z.B. größer gewählt als der Rohrschrägungswinkel β, so muß die Eintauchtiefe der Ventilklappe 14 in das Ventilrohr 15 größer gemacht werden. In dem Ausführungsbeispiel der Fig. 1 - 4 ist der Normalfall gezeigt. In diesem Ausführungsbeispiel beträgt der Klappenschrägungswinkel α und der Rohrschrägungswinkel β jeweils 45°. In dem Ausführungsbeispiel der Fig. 6 und 7 beträgt der Klappenschrägungswinkel α ungefähr 30° und der Rohrschrägungswinkel β etwa 45°. Der am vorderen Ende der Klappenwelle 15 liegende Schwenkpunkt 142 der Ventilklappe 14 befindet sich dabei immer innerhalb des Ventilrohrs 13'und hat zur Sicherstellung der Schließstellung der Ventilklappe 14 einen axialen Abstand von dem geschrägten Rohrende. Dieser, die Eintauchtiefe der schräg gestellten Ventilklappe 14 in das Ventilrohr 13 festlegende Axialabstand kann beliebig gewählt werden, muß aber immer so bemessen werden, daß der zum Rohrende hin am weitesten vorn liegende Randpunkt 143 auf der Außenkontur der schräg gestellten Ventilklappe 14 in allen Schwenkstellungen der Ventilklappe 14 vor dem am weitesten zurückliegenden Randpunkt 133 des Rotorrands 131 liegt (Fig. 3 und 4). Die Einhaltung dieser Abstandsbemessung stellt sicher, daß die Ventilklappe 14 aus dem Ventilrohr 13 herausdrehen kann und das Klappenventil 10 den Rohrquerschnitt in seiner Offenstellung noch freizugeben vermag. Je größer jedoch der Axialabstand vom geschrägten Rohrende ist, desto kleiner ist die maximale Durchflußmenge in der Offenstellung des Klappenventils 10.

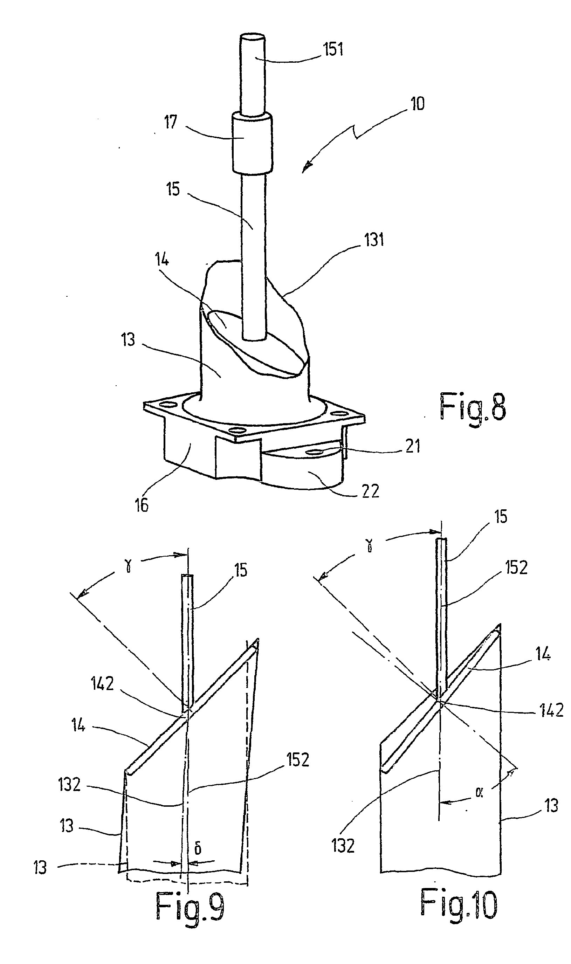

Zur Erzielung hoher Dichtheit, was ein dichtendes Anschmiegen des Ventilrohrs 13 an die Ventilklappe 14 voraussetzt, ist die Klappengeometrie, also die äußeren Abmessungen der Ventilklappe 14, etwas größer gewählt als die innere Geometrie des Rohrs, also der Abmessungen des lichten Rohrquerschnitts im Schließbereich der Ventilklappe 14, so daß sich beim Schließen des Klappenventils 10 , d.h. beim Hineindrehen der Ventilklappe 14 in das Ventilrohr 13, eine Deformation des Ventilrohrs 13 hin zur Klappenkontur ergibt. Gleichzeitig wird während des Schließvorgangs durch die in das Ventilrohr 13 zunehmend hineindrehende Ventilklappe 14 das Ventilrohr 13 um den Schnittpunkt von Rohrachse 132 und Achse 152 der Klappenwelle 15 gekippt, wie dies in Fig. 9 illustriert ist. Der Schnittpunkt fällt mit dem Schwenkpunkt 142 der Ventilklappe 14 am vorderen Ende der Klappenwelle 15 zusammen.

In Fig. 9 ist ausschnittweise das Ventilrohr 13 im seiner Kippstellung um den Rohrkippwinkel δ, im Ausführungsbeispiel z.B. 5°, ausgezogen dargestellt, das nicht gekippte Ventilrohr 13 in seiner zu Fig. 1 unveränderten Ausrichtung strichliniert. Wie zu erkennen ist, vergrößert sich durch das Kippen der für die Ventilklappe 14 zum Hineindrehen zur Verfügung stehende Rohrquerschnitt, so daß ein mechanisches Klemmen der Ventilklappe 14 im Ventilrohr 13 verhindert wird. Das Klappenventil 14 läßt sich trotz größerer Klappenkontur im Vergleich zur Rohrkontur immer durchdrehen. Dies vereinfacht die Regelbarkeit des Klappenventils 10 und verhindert bei fertigungsbedingten Maßschwankungen mechanische Klemmer im Klappenventil 10. Die Klappenkontur hängt vom Klappenschrägungswinkel α ab, wobei mit kleiner werdendem Klappenschrägungswinkel α sich die Klappenfläche verkleinert, aber auch der Angriffspunkt der Kippkraft auf das Ventilrohr 13 sich ins Rohrinnere hinein verlagert, was eine höhere Kippkraft zum Verkippen des Ventilrohrs 13 um den Schnittpunkt P erfordert und damit zu einer gewissen Schwergängigkeit der Ventileinstellung in Nähe der Schließstellung führt. Vorteilhaft ist die Außenkontur der Ventilklappe 14 auf das Ventilrohr 13 so abgestimmt, daß die auf den lichten Rohrquerschnitt 135 projizierte Fläche der Ventilklappe 14 einen Kreis bildet, dessen Durchmesser gleich dem lichten Rohrdurchmesser des Ventilrohrs 13 ist oder sequentiell um nicht mehr als 20 % von dem lichten Rohrdurchmesser abweicht.

Damit sich das dünnwandige Ventilrohr 13 im geschlossenen Zustand an die Ventilklappe 14 anschmiegen kann, darf die Wandstärke des Ventilrohrs 13 nicht zu groß und der Innendurchmesser der Ventilrohrs 13 nicht zu klein sein. Dagegen darf aus Festigkeits- und Schwingungsgründen die Wandstärke des Ventilrohrs 13 nicht zu klein und der Durchmesser des Ventilrohrs 13 nicht zu groß gewählt werden. Eine Optimierung dieser gegensätzlichen Anforderungen wird erreicht mit einem Innendurchmesser des Ventilrohrs 13 zwischen 5 mm und 200 mm und einer Wandstärke des Ventilrohrs 13 zwischen 0,05 mm und 2 mm.

Bei der Ausführung des Klappenventils 10 mit einer gegenüber der Rohrgeometrie größeren Klappengeometrie kann anstelle der Kippbarkeit des Ventilrohrs 13 auch bei der Ventilklappe 14 die Möglichkeit des Kippens gegenüber der Klappenwelle 15 vorgesehen werden, wie dies in Fig. 10 illustriert ist. Dort ist das elastisch verformbare Ventilrohr 13 steif, also nicht kippbar, ausgeführt, dagegen die Ventilklappe 14 im Schwenkpunkt 142 kippbar ausgebildet. Anstelle der oder zusätzlich zur Kippbarkeit der Ventilklappe 14 kann die Klappenkontur dünnwandig ausgelegt werden. Die elliptische Fläche der Ventilklappe 14 ist größer als die vom Rohrand 131 am abgeschrägten Rohrende umschlossene lichte Querschnittsfläche des Ventilrohrs 13. Bei offenem Klappenventil 10 hat sich die Ventilklappe 14 teilweise aus dem Ventilrohr 13 herausbewegt und die Ventilklappe 14 hat eine in Fig. 1 dargestellte Schrägstellung in der der Wellenneigungswinkel γ zwischen der Flächennormalen der Ventilklappe 14 und der Achse 152 der Klappenwelle 15, das ist die Neigung der Ventilklappe 14 gegenüber der Klappenwelle 15, γ = 45° beträgt. Beim Schließvorgang dreht sich die Ventilklappe 14 zunehmend in das Ventilrohr 13 hinein, wobei sich aufgrund der größeren Klappengeometrie eine Deformierung des Ventilrohrs 13 ergibt und gleichzeitig die Ventilklappe 14 um ihren Schwenkpunkt 142 an der Klappenwelle 15 gekippt bzw. verformt wird. In der in Fig. 10 gezeigten Schließstellung des Klappenventils 10 ist die Ventilklappe 14 maximal gekippt und der Wellenschrägungswinkel γ hat sich vergrößert, im Ausführungsbeispiel von 45° auf 48°, die Ventilklappe 14 steht also steiler zur Klappenwelle 15 und hat einen größeren Klappenschrägungswinkel α, ist also steiler bezüglich der Rohrachse 132 des steifen Ventilrohrs 13 angestellt. (Bei mit der Rohrachse 132 fluchtender Achse 152 der Klappenwelle 15 sind Klappenschrägungswinkel α und Wellenneigungswinkel γ immer gleich.) Wie zu erkennen ist, verkleinert sich durch das Kippen der Ventilklappe 14 die in den Rohrquerschnitt hineindrehende Klappenfläche, so daß auch hier - wie vorstehend beschrieben - die Ventilklappe 14 ohne Anschlag am Ventilrohr 13 durchgedreht werden kann. Beim Herausdrehen aus der Schließstellung kippt die Ventilklappe 14 wieder in ihre ursprüngliche Stellung mit γ = 45° zurück.

Der gleiche Effekt kann auch allein durch die Flexibilität der Ventilklappe 14 ohne ihre zusätzliche Ausbildung zum Kippen um den Schwenkpunkt 142 erreicht werden. In diesem Fall wird der in das Ventilrohr 13 einschwenkende Bereich der Ventilklappe 14 durch das steife Ventilrohr 13 elastisch ausgelenkt, so daß sich die auf den Rohrquerschnitt projizierte Klappenfläche ebenfalls verkleinert.
Es ist möglich, sowohl das Ventilrohr 13 als auch die Ventilklappe 14 wie beschrieben kippbar auszubilden. Dabei ergänzen sich die beschriebenen Effekte und führen zu einem extrem leichtgängigen, dicht schließenden Klappenventil 10.

Ventilklappe 14 und/oder Ventilrohr 13 können aus Kunststoff, aus Thermoplast, Duroplaste oder Elastomere gefertigt werden, die bei entsprechender geometrischer Gestaltung als Dichtelemente fungieren können. Beide Bauteile können auch in 2-Komponenten-Technologie gefertigt werden. Die Herstellung von Ventilklappe 14 oder Ventilrohr 13 aus Metall oder Keramik ist ebenfalls möglich.

Wird die Ventilklappe 14 aus einem Elastomer hergestellt, so kann anstelle des flexiblen Ventilrohrs 13 auch ein starres Ventilrohr zum Einsatz kommen, ohne daß das Schließmoment des Klappenventils erhöht wird. Es ist auch möglich, die zumindest annähernd elliptische Ventilklappe mit verschiedenen flexiblen Elementen zu versehen, so daß durch diese Elemente sowohl eine Abdichtung eines steifen als auch eines flexiblen, dünnwandigen Ventilrohrs erzielt wird.

Das beschriebenen Klappenventil 10 hat den Vorteil, daß durch die beschriebene Konstruktion auch die Gefahr von mechanischen Klemmern minimiert ist, da evtl. Maßschwankungen der Ventilklappe 14 sich durch die Schrägstellung gegenüber dem Ventilrohr 13 weniger stark auswirken. Auch unterstützt der faltenbalgartige Rohrabschnitt 134 des Ventilrohrs 13 ein Schrägstellen oder Verkippen des Ventilrohrs 13 und somit ein besseres Umschließen der Ventilklappe 14. Ein mechanischer Anschlag für die Festlegung der Schließstellung der Ventilklappe 14 ist bei dem beschriebenen Klappenventil 10 überflüssig.

Bei geringen Anforderungen an die Dichtheit des Klappenventils 10 kann die Außenkontur der Ventilklappe 14 gleich der oder kleiner als die Kontur des lichten Querschnitts des Rohrs im Schließbereich der Ventilklappe 14 gewählt werden, um das Schließmoment des Klappenventils 10 weiter zu reduzieren.

Die Steuerkennlinie des Klappenventils 10 kann verändert werden, indem der schräge Rohrrand 131 zumindest partiell gewellt wird. In dem in Fig. 8 dargestellten Ausführungsbeispiel des Klappenventils 10 hat der gesamte umlaufende Rohrrand 131 Wellenform. Durch entsprechende Ausbildung und Plazierung der Erhebungen und Vertiefungen am Rohrrand 131 kann der freigegebene Öffnungsquerschnitt des Klappenventils 10 über den Schwenkweg der Ventilklappe 14 bzw. dem Drehwinkel der Klappenwelle 15 in gewünschter Weise verändert werden. Eine weitere Kennlinienbeeinflussung wird durch relatives Verdrehen von Ventilrohr 13 und Ventilklappe 14 am Ansaugrohr 10 erreicht.

Die Erfindung ist nicht auf die beschriebenen Ausführungsbeispiele beschränkt. So muß nicht das gesamte Ventilrohr 13 flexibel oder elastisch verformbar ausgebildet sein. Es genügt, wenn diese Ausbildung der Ventilrohrs 13 im Schließbereich der Ventilklappe 14 vorgenommen ist, wobei sich der flexible Bereich bis zum abgeschrägten Rohrrand 131 hin erstrecken kann.

## Patentansprüche

1. Klappenventil zum Steuern eines Gasstroms, mit einem den Gasstrom führenden Ventilrohr (13) mit einem steuerbaren Rohrquerschnitt (135) und einer im Ventilrohr (13) angeordneten, zwischen einer den Rohrquerschnitt (135) des Ventilrohrs (13) maximal freigebenden Offenstellung und einer den Rohrquerschnitt (135) überdeckenden Schließstellung schwenkbaren Ventilklappe (14), die auf einer verstellbaren Klappenwelle (15) drehfest sitzt, **dadurch gekennzeichnet, daß** ein Rohrende des Ventilrohrs (13) so abgeschrägt ist, daß ein Rohrrand (131) des Rohrendes im wesentlichen in einer unter einem spitzen Rohrschrägungswinkel (β) zur Rohrachse (132) des Ventilrohrs (13) verlaufenden Ebene liegt, daß die Ventilklappe (14) eine mindestens annähernd elliptische Außenkontur aufweist und im Ventilrohr (13) im Bereich des geschrägten Rohrendes so angeordnet ist, daß eine Flächennormale (20) der Ventilklappe (14) mit der Rohrachse (132) einen spitzen Klappenschrägungswinkel (α) einschließt, und daß das Ventilrohr (13) zumindest im Bereich des abgeschrägten Rohrendes mindestens partiell flexibel ausgebildet ist.

2. Klappenventil nach Anspruch 1, **dadurch gekennzeichnet, dass** das Ventilrohr (13) zumindest im Bereich des abgeschrägten Rohrendes gegenüber der Klappenwelle (15) kippbar ausgebildet ist.

3. Klappenventil nach Anspruch 1 oder 2, **dadurch gekennzeichnet, dass** die Ventilklappe (14) mindestens partiell flexibel ausgebildet ist.

4. Klappenventil nach einem der Ansprüche 1 bis 3, **dadurch gekennzeichnet, dass** die Ventilklappe (14) gegenüber der Klappenwelle (15) kippbar ausgebildet ist.

5. Klappenventil nach einem der Ansprüche 1 - 4, **dadurch gekennzeichnet, daß** die Klappenwelle (15) unter einem spitzen Wellenneigungswinkel (γ) zur Flächennormalen (20) der Ventilklappe (14) geneigt ist.

6. Klappenventil nach Anspruch 5, **dadurch gekennzeichnet, daß** die Achse (152) der Klappenwelle (15) mit der Rohrachse (132) fluchtet.

7. Klappenventil nach einem der Ansprüche 1 - 6, **dadurch gekennzeichnet, daß** die Ventilklappe (14) an einem Ende der Klappenwelle (15) befestigt ist.

8. Klappenventil nach einem der Ansprüche 1 - 7, **dadurch gekennzeichnet, daß** der Klappenschrägungswinkel (α) zwischen 1° und 89° frei wählbar ist.

9. Klappenventil nach einem der Ansprüche 1 - 8, **dadurch gekennzeichnet, daß** der Rohrschrägungswinkel (β) zwischen 3° und 85° frei wählbar ist.

10. Klappenventil nach einem der Ansprüche 1 - 9, **dadurch gekennzeichnet, daß** der Klappenschrägungswinkel (α) und der Rohrschrägungswinkel (β) unabhängig voneinander frei wählbar sind.

11. Klappenventil nach einem der Ansprüche 7 - 10, **dadurch gekennzeichnet, daß** ein durch die Klappenwelle (15) festgelegter Schwenkpunkt (142) der Ventilklappe (14) von dem abgeschrägten Rohrende einen solchen Abstand aufweist, daß der zum abgeschrägten Rohrende hin am weitesten vorn liegende Randpunkt (143) der Außenkontur der schräggestellten Ventilklappe (14) in allen Schwenkstellungen der Ventilklappe (14) über den am weitesten zurück liegenden Randpunkt (133) des geschrägten Rohrrands (131) vorsteht.

12. Klappenventil nach einem der Ansprüche 1 - 11, **dadurch gekennzeichnet, daß** die Außenkontur der Ventilklappe (14) auf das Ventilrohr (13) so abgestimmt ist, daß die auf den lichten Rohrquerschnitt projizierte Fläche der Ventilklappe (14) annähernd einen Kreis bildet, dessen Durchmesser um nicht mehr als 20 % von dem lichten Durchmesser des Ventilrohrs (13) abweicht, vorzugsweise gleich dem lichten Durchmesser ist.

13. Klappenventil nach einem der Ansprüche 1 - 12, **dadurch gekennzeichnet, daß** die Ventilklappe (14) eine die Außenkontur festlegende Randfläche (141) aufweist, die konvex gewölbt ist.

14. Klappenventil nach einem der Ansprüche 1 - 13, **dadurch gekennzeichnet, daß** das Ventilrohr (13) zumindest im Schließbereich der Ventilklappe (14) elastisch verformbar ausgebildet ist.

15. Klappenventil nach einem der Ansprüche 1 - 14, **dadurch gekennzeichnet, daß** das Ventilrohr (13) zumindest im Schließbereich der Ventilklappe (14) dünnwandig ausgebildet ist.

16. Klappenventil nach einem der Ansprüche 1 - 15, **dadurch gekennzeichnet, daß** das Ventilrohr (13) einen Innendurchmesser aufweist, der zwischen 5 mm und 200 mm bemessen ist und eine Wandstärke aufweist, die zwischen 0,05 mm und 2 mm bemessen ist.

17. Klappenventil nach einem der Ansprüche 1 - 16, **dadurch gekennzeichnet, daß** das Ventilrohr (13) im Schließbereich der Ventilklappe (14) eine Innenkontur aufweist, deren Abmessungen wenig kleiner sind als die Abmessungen der Außenkontur der Ventilklappe (14).

18. Klappenventil nach einem der Ansprüche 1 - 16, **dadurch gekennzeichnet, daß** das Ventilrohr (13) im Schließbereich der Ventilklappe (14) eine Innenkontur aufweist, deren Abmessungen gleich den Abmessungen der Außenkontur der Ventilklappe (14) sind.

19. Klappenventil nach einem der Ansprüche 1 - 16, **dadurch gekennzeichnet, daß** das Ventilrohr (13) im Schließbereich der Ventilklappe (14) eine Innenkontur aufweist, deren Abmessungen etwas größer sind als die Abmessungen der Außenkontur der Ventilklappe (14).

20. Klappenventil nach einem der Ansprüche 1 - 19, **dadurch gekennzeichnet, daß** das Ventilrohr (13) in einem vom abgeschrägten Rohrende beabstandeten Rohrabschnitt (134) faltenbalgartig gewellt ist.

21. Klappenventil nach einem der Ansprüche 1 - 20, **dadurch gekennzeichnet, daß** der Rohrrand (131) des abgeschrägten Rohrendes mindestens partiell gewellt ist.

22. Klappenventil nach einem der Ansprüche 1 - 21, **gekennzeichnet durch** seine Verwendung als Abgasrückführventil in einer Abgasrückführleitung einer Brennkraftmaschine.

23. Klappenventil nach einem der Ansprüche 1 - 21, **gekennzeichnet durch** seine Anordnung in der Zuluftleitung eines Ansaugtrakts einer Brennkraftmaschine.

## Claims

1. Flap valve for controlling a gas stream, with a valve tube (13) carrying the gas stream and having a controllable tube cross section (135) and with a valve flap (14) which is arranged in the valve tube (13) and is pivotable between an open position releasing the tube cross section (135) of the valve tube (13) to a maximum and a closing position covering the tube cross section (135) and which is seated fixedly in terms of rotation on an adjustable flap shaft (15), **characterized in that** one tube end of the valve tube (13) is bevelled such that a tube edge (131) of the tube end lies essentially in a plane running at an acute tube bevel angle (β) to the tube axis (132) of the valve tube (13), **in that** the valve flap (14) has an at least approximately elliptic outer contour and is arranged in the valve tube (13), in the region of the bevelled tube end, such that a surface normal (20) of the valve flap (14) forms an acute flap bevel angle (α) with the tube axis (132), and **in that** the valve tube (13), at least in the region of the bevelled tube end, is designed to be at least partially flexible.

2. Flap valve according to Claim 1, **characterized in that** the valve tube (13), at least in the region of the bevelled tube end, is designed to be tiltable with respect to the flap shaft (15).

3. Flap valve according to Claim 1 or 2, **characterized in that** the valve flap (14) is designed to be at least partially flexible.

4. Flap valve according to one of Claims 1 to 3, **characterized in that** the valve flap (14) is designed to be tiltable with respect to the flap shaft (15).

5. Flap valve according to one of Claims 1 - 4, **characterized in that** the flap shaft (15) is inclined at an acute shaft inclination angle (γ) to the surface normal (20) of the valve flap (14).

6. Flap valve according to Claim 5, **characterized in that** the axis (152) of the flap shaft (15) is in alignment with the tube axis (132).

7. Flap valve according to one of Claims 1 - 6, **characterized in that** the valve flap (14) is fastened to one end of the flap shaft (15).

8. Flap valve according to one of Claims 1 - 7, **characterized in that** the flap bevel angle (α) is freely selectable between 1° and 89°.

9. Flap valve according to one of Claims 1 - 8, **characterized in that** the tube bevel angle (β) is freely selectable between 3° and 85°.

10. Flap valve according to one of Claims 1 - 9, **characterized in that** the flap bevel angle (α) and the tube bevel angle (β) are freely selectable independently of one another.

11. Flap valve according to one of Claims 7 - 10, **characterized in that** a pivot point (142), defined by the flap shaft (15), of the valve flap (14) is at such a distance from the bevelled tube end that, in all the pivoting positions of the valve flap (14), the edge point (143), lying furthest forwards with the respect to the bevelled tube end, of the outer contour of the obliquely set valve flap (14) projects beyond the edge point (133), lying furthest back, of the bevelled tube edge (131).

12. Flap valve according to one of Claims 1 - 11, **characterized in that** the outer contour of the valve flap (14) is coordinated with the valve tube (13) such that the surface, projected onto the clear tube cross section, of the valve flap (14) forms approximately a circle, the diameter of which does not deviate by more than 20% from the clear diameter of the valve tube (13), preferably is equal to the clear diameter.

13. Flap valve according to one of Claims 1 - 12, **characterized in that** the valve flap (14) has a convexly curved edge surface (141) defining the outer contour.

14. Flap valve according to one of Claims 1 - 13, **characterized in that** the valve tube (13) is designed to be elastically deformable at least in the closing region of the valve flap (14).

15. Flap valve according to one of Claims 1 - 14, **characterized in that** the valve tube (13) is of thin-walled design at least in the closing region of the valve flap (14).

16. Flap valve according to one of Claims 1 - 15, **characterized in that** the valve tube (13) has an inside diameter which is dimensioned between 5 mm and 200 mm and has a wall thickness which is dimensioned between 0.05 mm and 2 mm.

17. Flap valve according to one of Claims 1 - 16, **characterized in that** the valve tube (13) has in the closing region of the valve flap (14) an inner contour, the dimensions of which are a little smaller than the dimensions of the outer contour of the valve flap (14).

18. Flap valve according to one of Claims 1 - 16, **characterized in that** the valve tube (13) has in the closing region of the valve flap (14) an inner contour, the dimensions of which are equal to the dimensions of the outer contour of the valve flap (14).

19. Flap valve according to one of Claims 1 - 16, **characterized in that** the valve tube (13) has in the closing region of the valve flap (14) an inner contour, the dimensions of which are somewhat larger than the dimensions of the outer contour of the valve flap (14).

20. Flap valve according to one of Claims 1 - 19, **characterized in that** the valve tube (13) is corrugated in a concertina-like manner in a tube portion (134) spaced apart from the bevelled tube end.

21. Flap valve according to one of Claims 1 - 20, **characterized in that** the tube edge (131) of the bevelled tube end is at least partially corrugated.

22. Flap valve according to one of Claims 1 - 21, **characterized by** its use as an exhaust-gas recirculation valve in an exhaust-gas recirculation line of an internal combustion engine.

23. Flap valve according to one of Claims 1 - 21, **characterized by** its arrangement in the supply-air line of an intake tract of an internal combustion engine.

## Revendications

1. Soupape à clapet pour commander une veine de gaz comportant un tube de soupape (13) conduisant la veine de gaz et ayant une section de tube (135) commandée ainsi qu'un clapet de soupape (14) installé dans le tube de soupape (13), pivotant entre une position d'ouverture libérant au maximum la section (135) du tube de soupape (13) et une position de fermeture couvrant la section de tube (135), ce clapet étant solidaire en rotation d'un axe de clapet (115), réglable,
**caractérisée en ce qu'**
une extrémité du tube de soupape (13) est en biais,
un bord (131) de l'extrémité du tube est situé pratiquement dans un plan faisant un angle aigu (β) de la forme en biais par rapport à l'axe (132) du tube de soupape (13),
le clapet de soupape (14) a un contour extérieur au moins sensiblement elliptique et il est installé dans le tube de soupape (13) au niveau de l'extrémité de tube coupée en biais,
une normale (20) à la surface du clapet de soupape (14) fait avec l'axe (132) du tube un angle aigu (α) correspondant à l'inclinaison du clapet, et
le tube de soupape (13) est au moins partiellement souple au niveau de l'extrémité de tube coupée en biais.

2. Soupape à clapet selon la revendication 1,
**caractérisée en ce que**
le tube de soupape (13) est réalisé de manière basculante au moins dans la zone de l'extrémité de tube coupée en biais, par rapport à l'axe (15) du clapet.

3. Soupape à clapet selon la revendication 1 ou 2,
**caractérisée en ce que**
le clapet de soupape (14) est au moins en partie souple.

4. Soupape à clapet selon l'une des revendications 1 à 3,
**caractérisée en ce que**
le clapet de soupape (14) peut basculer par rapport à l'axe de clapet (15).

5. Soupape à clapet selon l'une des revendications 1 à 4,
**caractérisée en ce que**
l'axe de clapet (15) est incliné par rapport à la normale (20) à la surface du clapet de soupape (14) suivant un angle d'inclinaison d'arbre (γ), aigu.

6. Soupape à clapet selon la revendication 5,
**caractérisée en ce que**
l'axe (152) de l'arbre (15) du clapet est aligné sur l'axe (132) du tube.

7. Soupape à clapet selon l'une des revendications 1 à 6 ?
**caractérisée en ce que**
le clapet de soupape (14) est fixé à une extrémité de l'arbre de clapet (15).

8. Soupape à clapet selon l'une des revendications 1 à 7,
**caractérisée en ce que**
l'angle d'inclinaison (α) du clapet se choisit librement entre 1° et 89°.

9. Soupape à clapet selon l'une des revendications 1 à 8,
**caractérisée en ce que**
l'angle d'inclinaison ((β) du tube est choisi librement entre 3° et 85°.

10. Soupape à clapet selon l'une des revendications 1 à 9,
**caractérisée en ce que**
l'angle d'inclinaison (α) du clapet et l'angle d'inclinaison (β) du tube se choisissent librement indépendamment l'un de l'autre.

11. Soupape à clapet selon l'une des revendications 7 à 10,
**caractérisée en ce qu'**
un point de basculement (142) du clapet de soupape (14), fixé par l'arbre de l'arbre de clapet (15) est écarté de l'extrémité en biais du tube de façon que le point du bord (143) du contour extérieur du clapet de soupape (14) en position inclinée, situé le plus à l'avant par rapport à l'extrémité inclinée du tube, dépasse dans toutes les positions de basculement du clapet de soupape (14) par rapport au point du bord (133) du bord en biais (131) du tube, qui est le plus en retrait.

12. Soupape à clapet selon l'une des revendications 1 à 11,
**caractérisée en ce que**
le contour extérieur du clapet de soupape (14) est défini en fonction du tube de soupape (13) pour que la surface du clapet de soupape (14) projetée sur la section libre du tube forme sensiblement un cercle dont le diamètre ne diffère pas de plus de 20 % du diamètre libre du tube de soupape (13) et notamment est égal au diamètre libre.

13. Soupape à clapet selon l'une des revendications 1 à 12,
**caractérisée en ce que**
le clapet de soupape (14) a une surface de bord (141) fixant le contour extérieur, cette surface est bombée suivant une forme convexe.

14. Soupape à clapet selon l'une des revendications 1 à 13,
**caractérisée en ce que**
le tube de soupape (13) est réalisée de manière déformable élastiquement au moins dans la zone de fermeture du clapet de soupape (14).

15. Soupape à clapet selon l'une des revendications 1 à 14,
**caractérisée en ce que**
le tube de soupape (13) a une paroi mince au moins dans la zone de fermeture du clapet de soupape (14).

16. Soupape à clapet selon l'une des revendications 1 à 15,
**caractérisée en ce que**
le tube de soupape (13) a un diamètre intérieur compris entre 5 mm et 20 m et une épaisseur de paroi comprise entre 0,05 mm et 2 mm.

17. Soupape à clapet selon l'une des revendications 1 à 16,
**caractérisée en ce que**
le tube de soupape (13) présente un contour extérieur dans la zone de fermeture du clapet de soupape (14) dont les dimensions sont un peu plus petites que les dimensions du contour extérieur du clapet de soupape (14).

18. Soupape à clapet selon l'une des revendications 1 à 16,
**caractérisée en ce que**
le tube de soupape (13) présente dans la zone de fermeture du clapet de soupape (14), un contour intérieur dont les dimensions sont égales aux dimensions du contour extérieur du clapet de soupape (14).

19. Soupape à clapet selon l'une des revendications 1 à 16,
**caractérisée en ce que**
dans la zone de fermeture du clapet de soupape (14), le tube de soupape (13) a un contour intérieur dont les dimensions sont légèrement supérieures aux dimensions du contour extérieur du clapet de soupape (14).

20. Soupape à clapet selon l'une des revendications 1 à 19,
**caractérisée en ce que**
le tube de soupape (13) est ondulé en forme de soufflet dans un segment de tube (134) écarté de l'extrémité en biais du tube.

21. Soupape à clapet selon l'une des revendications 1 à 20,
**caractérisée en ce que**
le bord (131) de l'extrémité en biais du tube est au moins en partie ondulé.

22. Soupape à clapet selon l'une des revendications 1 à 20,
**caractérisée par**
son application comme clapet de réintroduction des gaz d'échappement dans une conduite de réintroduction des gaz d'échappement d'un moteur à combustion.

23. Clapet de soupape selon l'une des revendications 1 à 21,
**caractérisé par**
son installation dans la conduite d'alimentation de la tubulure d'aspiration d'un moteur à combustion.
